# EUROPEAN PATENT APPLICATION

(11) **EP 2 172 800 A1**
(43) Date of publication of application: **07.04.2010**
(21) Application number: 08765498.4
(22) Date of filing: 05.06.2008
(51) Int. Cl.: G02B 26/10, G02B 17/08, G03B 21/00, H04N 5/74

(54) **LIGHT SCANNING DEVICE**

(30) Priority: 03.08.2007 JP 2007203682
(71) Applicant: Sony Corporation, Tokyo 108-0075 (JP)
(72) Inventor: NAKAMURA, Akira, Tokyo 108-0075 (JP)
(74) Representative: Beder, Jens
(86) International application number: PCT/JP2008/060727
(87) International publication number: WO 2009/019934

(57) **Abstract**

A one-dimensional image is obtained by light modulation using a one-dimensional light modulation device 4 in which a plurality of pixels are arrayed in the form of a line. The obtained one-dimensional image is scanned by a light deflection unit 8 that performs scanning in a direction perpendicular to the array direction of the one-dimensional light modulation device 4, and projected by a projection optical system 6 that includes therein the light deflection unit 8, thereby forming a two-dimensional image. The aspect ratio of the obtained two-dimensional image is variable in accordance with an angle through which the one-dimensional image is scanned by the light deflection unit 8.

## Description

### Technical Field

The present invention relates to a light scanning apparatus that forms a two-dimensional image using a light modulation device in which pixels are arrayed one-dimensionally, and particularly to a light scanning apparatus used in a projector apparatus that performs enlarged projection on a screen.

### Background Art

In the past, various kinds of two-dimensional display devices, such as liquid crystal light valves, and projector apparatuses that perform enlargement and projection for these two-dimensional display devices have been proposed and put into practical use.

However, recently there has been progress in introduction of new broadcasting methods, improvement of image processing speeds due to advances in computing devices, and conversion from analog cinema, that enlarges and projects film, to digital cinema. Thus, demands relating to resolution have been becoming greater, and two-dimensional display devices are being required to keep up with the increases in resolution.

That is, to accommodate the higher resolution of a two-dimensional display device, the number of pixels of the device is increased. If increasing the resolution is attempted while keeping the size of the display device fixed, the openings of the display portions will inevitably become smaller, and it is difficult to achieve a bright projector apparatus. Meanwhile, if increasing the resolution is attempted while keeping the pixel size fixed, the size of the display device will necessarily become larger, and the projector apparatus including an optical system will be larger and more expensive. Moreover, in the manufacturing process of a two-dimensional display device, measures for preventing entrance of foreign matter of smaller sizes are necessary in the case of smaller pixels, while the manufacturing apparatus itself needs to be larger in the case of a larger display device.

Here, taking High Definition Television (so-called HDTV) as an example, while about 2,070,000 pixels (1920 × 1080) are necessary in the case of a two-dimensional display device, a system in which scanning is performed in the H-direction using a one-dimensional display device can be achieved with a 1 × 1080 device. This is a clear difference.

In addition, two methods are conceivable for displaying a variable aspect ratio image using a two-dimensional display device: fabricating a device itself having the largest desired aspect ratio; or achieving a desired aspect ratio by tiling of projectors of a smaller aspect ratio.

To fabricate a two-dimensional display device having the largest desired aspect ratio, fixed costs such as investment in equipment for semiconductors used in fabrication of the device are required. Therefore, a certain level of demand is needed to ensure profitability. Moreover, as described above, the number of pixels increases and thereby the probability of pixel defects becomes high, which is also a cause of an increase in cost. Thus, this is not a practical method in the current state of the art.

Meanwhile, as for the second method, considering the necessity of adjustments of geometries, brightness and colors among the different projectors and maintenance work in response to changes with age, it must be said that there are many problems in the current state of the art.

Here, Japanese Unexamined Patent Application Publication No. 2006-72104 discusses a two-dimensional image display apparatus that uses a one-dimensional light modulation device.

For the above-mentioned one-dimensional light modulation device, a GLV (Grating Light Valve) of Silicon Light Machines, USA, as discussed in U.S. Patent No. 5, 311,360 can be used, for example. The GLV is composed of a phase-reflection-type diffraction grating that is formed by using MEMS (MICROELECTROMECHANICAL SYSTEM) technology.

When the GLV is used with an illumination optical system that irradiates the GLV, the diffraction grating constituting the pixels is mechanically operated by using an image signal, and the resulting phase differences are controlled so that a function of an image display device is provided.

In an optical system, a so-called Schlieren optical system, that separates ± first-order diffracted light and zeroth-order diffracted light coming from each pixel and blocks OFF light, is adopted and thereby an image is formed.

In addition, a projector optical system as a large-type display device using the above-mentioned one-dimensional display device is proposed in U.S. Patent No. 5,982,553 or Japanese Unexamined Patent Application Publication (Translation of PCT Application) No. 2000-513114. In the system, a one-dimensional intermediate image of the one-dimensional display device is enlarged and projected by a projection lens. Further, a light deflection unit is arranged at the position of a pupil of the projection lens or in the vicinity thereof, and scanning is performed to obtain a two-dimensional image projected to a screen.

### Disclosure of Invention

It is difficult to avoid the problems associated with a higher resolution with a conventional two-dimensional display device and provide a light scanning apparatus, that constitutes a two-dimensional image forming apparatus with variable aspect ratios, using a small and inexpensive one-dimensional display device.

A light scanning apparatus of the present invention includes a one-dimensional light modulation device in which a plurality of pixels are arrayed in the form of a line; a light deflection unit that scans a one-dimensional image, which is obtained by light modulation using the one-dimensional light modulation device, in a direction perpendicular to the array direction of the one-dimensional light modulation device; and a projection optical system that includes therein the light deflection unit and that projects the one-dimensional image and forms a two-dimensional image. The light scanning apparatus is **characterized in that** the aspect ratio of the two-dimensional image is variable in accordance with an angle through which the one-dimensional image is scanned by the light deflection unit.

In the above-mentioned light scanning apparatus of the present invention, a one-dimensional image is obtained by light modulation using the one-dimensional light modulation device in which a plurality of pixels are arrayed in the form of a line. The obtained one-dimensional image is scanned by the light deflection unit that performs scanning in a direction perpendicular to the array direction of the one-dimensional light modulation device, and projected by a projection optical system that includes therein the light deflection unit, thereby forming a two-dimensional image.

Here, the aspect ratio of the obtained two-dimensional image is variable in accordance with an angle through which the one-dimensional image is scanned by the light deflection unit.

In a light scanning apparatus of the present invention, the aspect ratio of an obtained two-dimensional image is variable in accordance with the scanning angle of the light deflection unit included in the projection optical system. Thus, a small and inexpensive image-forming apparatus, in which the aspect ratio of a two-dimensional image is variable, can be configured.

### Brief Description of Drawings

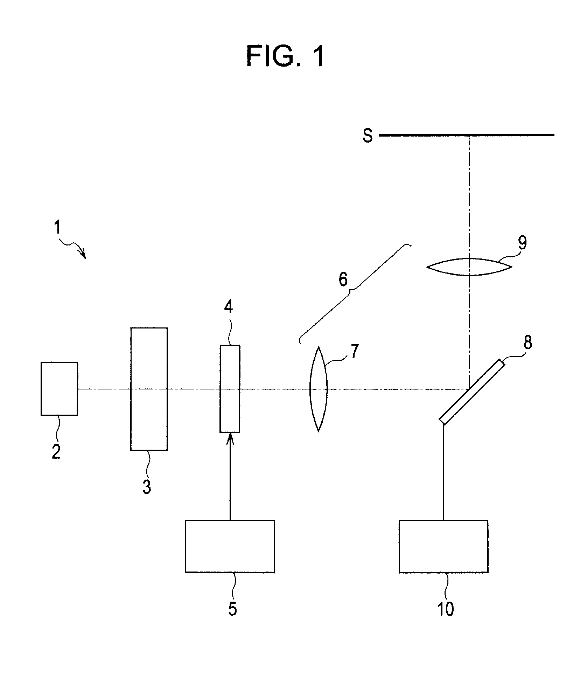

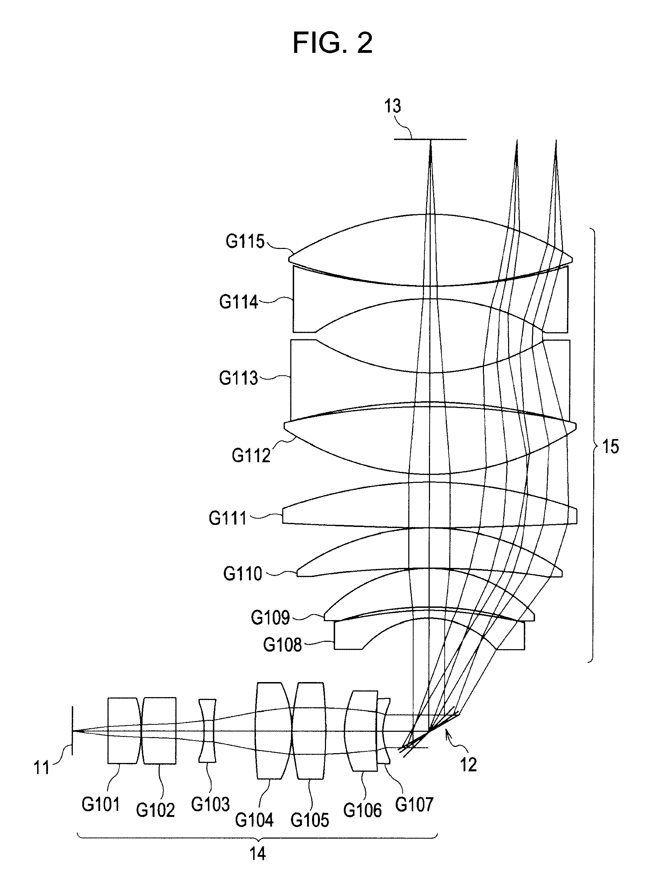

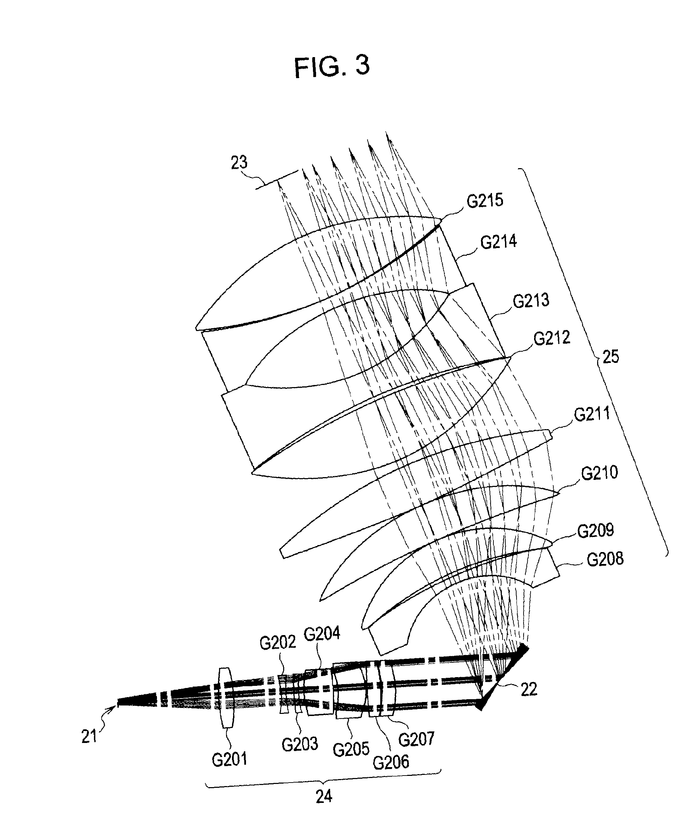

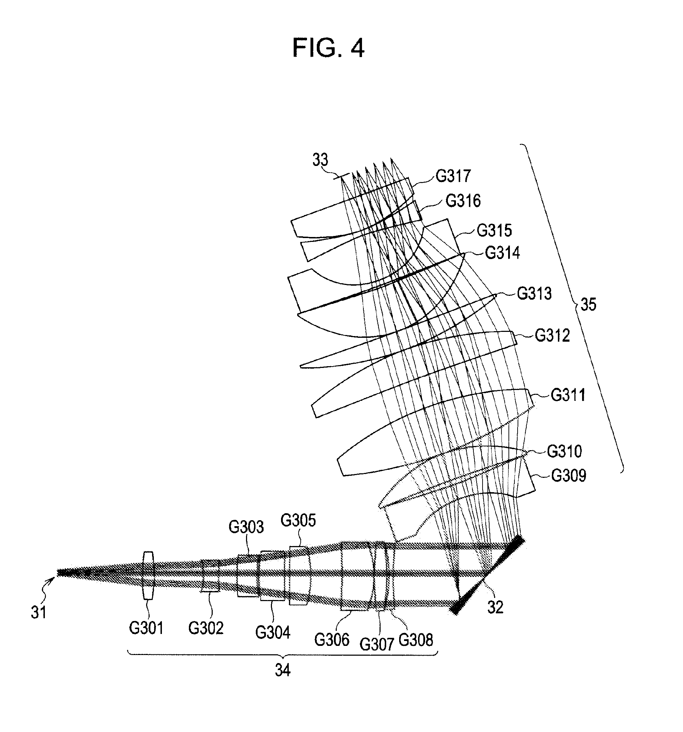

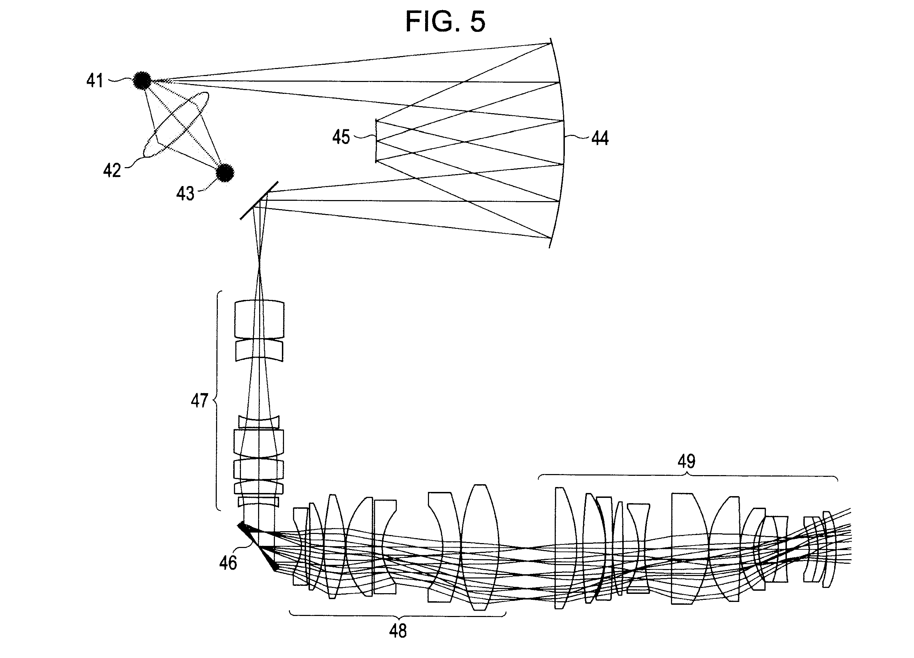

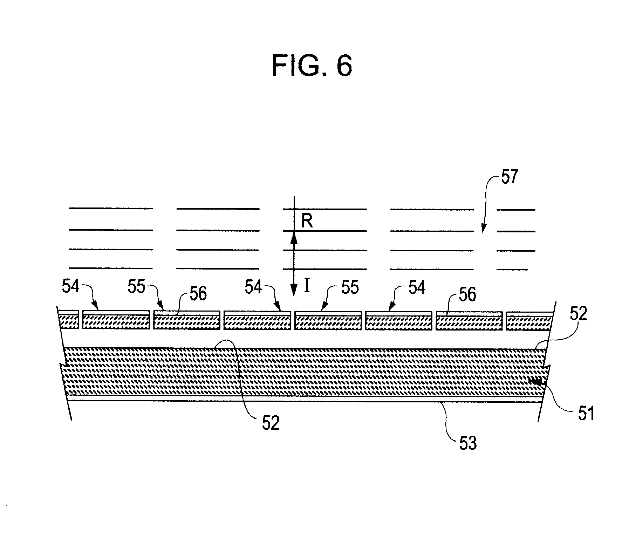

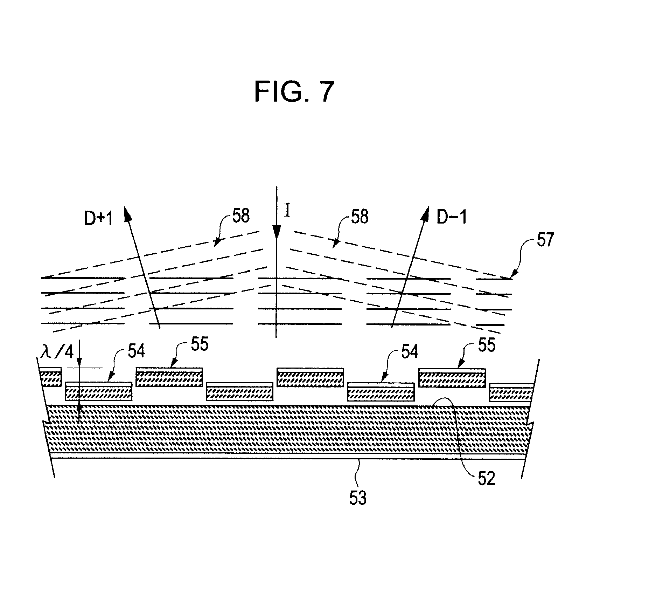

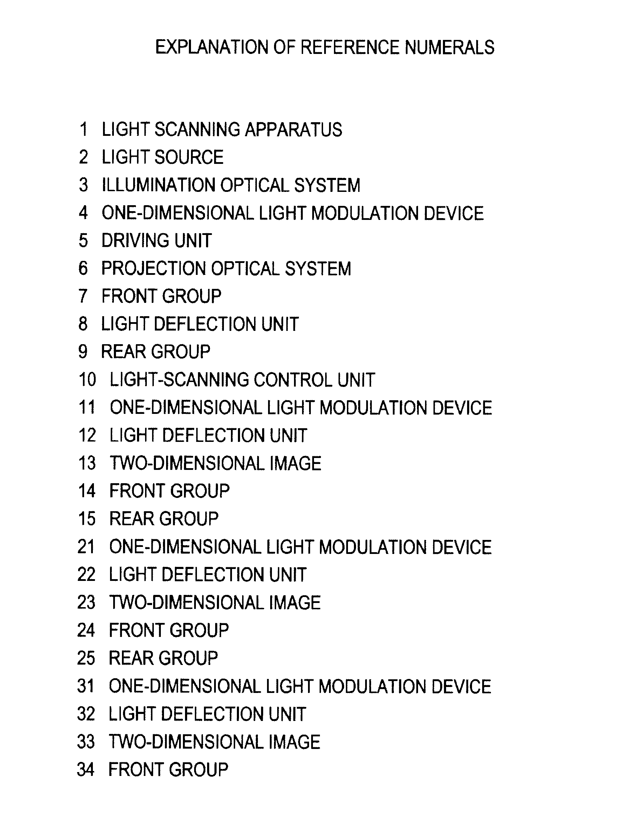

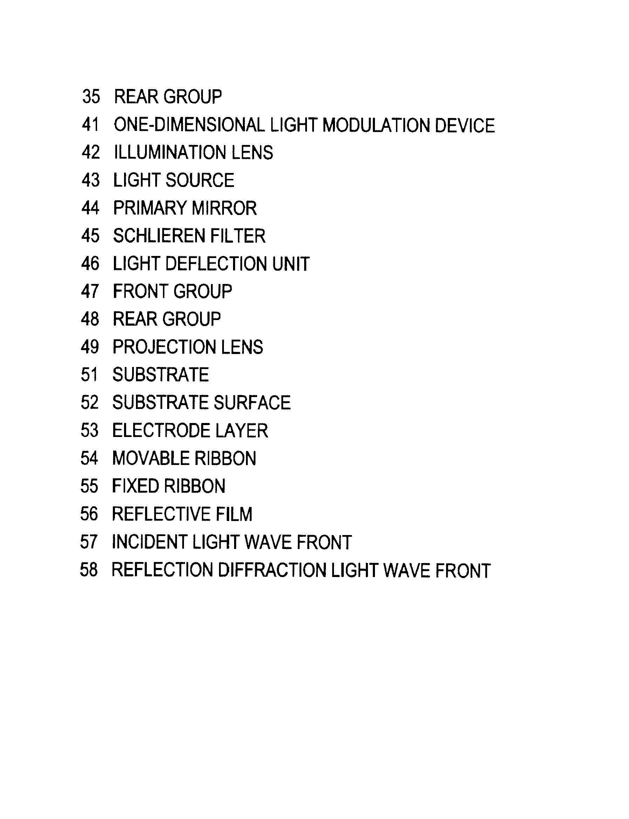

Fig. 1 is a schematic configuration diagram of a light scanning apparatus according to a first embodiment of the present invention; Fig. 2 is an XZ sectional view of a projection optical system of a light scanning apparatus according to a second embodiment of the present invention; Fig. 3 is an XZ sectional view of a projection optical system of a light scanning apparatus according to a third embodiment of the present invention; Fig. 4 is an XZ sectional view of a projection optical system of a light scanning apparatus according to a fourth embodiment of the present invention; Fig. 5 is a schematic diagram of a projector optical system according to a fifth embodiment; Fig. 6 is an explanatory diagram showing a non-operating state of a GLV; and Fig. 7 is an explanatory diagram showing an operating state of the GLV.

### Best Modes for Carrying Out the Invention

Embodiments of the present invention are described below with reference to the drawings.

### First Embodiment

Fig. 1 is a schematic configuration diagram of a light scanning apparatus 1 according to the present embodiment.

As shown in Fig. 1, for example, a light source 2, an illumination optical system 3, a one-dimensional light modulation device 4 and a projection optical system 6 are arranged on an optical axis shown as a dash-dot line.

The light source 2 consists of a laser light source or the like such as a semiconductor laser or a solid laser, for example.

Light generated from the light source 2 is directed, as a linear beam, to the one-dimensional light modulation device 4 through the illumination optical system 3, for example. In addition, the illumination optical system 3 includes a lens system for shaping the beam, enlarging the beam or the like.

The one-dimensional light modulation device 4 is a GLV device, which is described later, a liquid crystal display device or the like, for example, and has a plurality of constituent elements arrayed in a predetermined direction. The one-dimensional light modulation device 4 receives a signal from a driving unit 5 and driving-control is performed. In the present embodiment, while a transmissive-type device is shown for convenience of illustration, this is not limitative and a reflective-type device or the like may also be used.

The driving unit 5 includes a driving circuit for the one-dimensional light modulation device 4. The driving unit 5 generates a driving signal that corresponds to a command from an external circuit or the like, and supplies the driving signal to the one-dimensional light modulation device 4. By using the driving signal from the driving unit 5, light modulation is performed in the one-dimensional light modulation device 4 and a one-dimensional image (one-dimensional modulated light) is generated.

The above-mentioned one-dimensional image is guided by the projection optical system 6 and projected on to a screen S, for example.

The above-mentioned projection optical system has, for example, a front group 7 on the one-dimensional light modulation device side and a rear group 9 on a two-dimensional image side with a light deflection unit (a scanning mirror) 8 therebetween. In Fig. 1, each of the front group 7 and the rear group 9 is schematically shown by being simplified as a single lens. However, as described later, each of the groups is actually constituted of a group of optical lenses, for example.

A one-dimensional image from the one-dimensional light modulation device 4 enters the light deflection unit 8 through the front group 7, for example.

The light deflection unit 8 is a mirror (a scanning mirror), for example, that is provided such that the angle of reflection of light can be controlled to perform scanning. The light deflection unit 8 scans the above-mentioned one-dimensional image in a direction perpendicular to the array direction of the constituent elements of the one-dimensional light modulation device 4 (the longitudinal direction of the one-dimensional light modulation device 4). For example, a light-scanning control unit 10 is connected to the light deflection unit 8, and control of operations is performed by receiving a control signal from the light-scanning control unit 10. A galvanometer scanner is used as the light deflection unit 8, and the scanning position is controlled by controlling rotation of a galvano mirror.

The one-dimensional image scanned by the light deflection unit 8 changes its direction of travel in accordance with the scanning position, is transmitted through and exits the rear group 9, and forms an image on the screen S, thereby forming a two-dimensional image.

For example, with regard to the projection optical system 6, the one-dimensional light modulation device 4 is arranged on the object side of the projection optical system 6, and the light deflection unit 8 is arranged at the aperture position.

For example, an optical system having a positive refractive power (power) can be adopted for each of the front group 7 and the rear group 9 that are arranged symmetrically with the above-mentioned light deflection unit 8 therebetween.

In addition, in applications to a projector apparatus or the like, a configuration having in a subsequent stage of the projection optical system 6 a projection lens that further enlarges and projects a two-dimensional image can be mentioned. That is, the two-dimensional image formed through the projection optical system 6 can serve as an intermediate image, and a projection lens can be arranged for enlarging and projecting the intermediate image on to the screen.

In addition, it is also conceivable to design a lens system having negative power with a projection lens included in the rear group 9. However, considering the problem of distortion-aberration, increase in the size of an exit-side lens and the like, a practically desirable configuration form is such that the rear group has a positive power and a two-dimensional image is formed on the image plane of the projection optical system 6 and then enlarged and projected. With this kind of arrangement, the lens arrangement of the rear group and the projection lens for the enlargement and projection can be designed separately.

In the projection optical system 6, a surface of an optical element constituting the projection optical system is preferably axially symmetric with respect to the optical axis.

In addition, the projection optical system 6 preferably has a telecentric property both on the one-dimensional light modulation device side and the two-dimensional image side.

In addition, a configuration may also have an Offner optical system as a relay image-forming system between the one-dimensional light modulation device 4 and the above-mentioned projection optical system 6.

In addition, while an irradiated-type configuration using the light source 2 and the illumination optical system 3 is shown in Fig. 1, a configuration using a one-dimensional light modulation device of the self-light-emitting type is also possible.

The light scanning apparatus of the present embodiment is configured such that the aspect ratio of a projected two-dimensional image is variable in accordance with an angle through which a one-dimensional image is scanned by the light deflection unit 8. That is, for example, by controlling the operation of the light deflection unit 8 through the light-scanning control unit 10 as mentioned above, the scanning angle of the light deflection unit 8 is controlled such that a two-dimensional image is made to have a desired aspect ratio. Thus, a two-dimensional image of a variable aspect ratio can be obtained from the one-dimensional light modulation device.

Regardless of desired aspect ratios, the one-dimensional light modulation device may be of the same specification. In addition, since a variable aspect ratio system is achieved by a one-set one-dimensional device and a one-set light source, adjustments of geometries, brightness and colors are unnecessary and maintenance work in response to changes with age is also unnecessary.

In the present embodiment, focusing on a same-size image-forming system for a finite two-dimensional image, that has a symmetrical structure with respect to an aperture, a one-dimensional light modulation device is disposed on the object side and a light deflection unit is disposed at the position of the aperture. A two-dimensional image is obtained by scanning performed by the light deflection unit, and the scanning angle of the light deflection unit is controlled in accordance with desired aspect ratios, thereby achieving a variable-aspect-ratio light scanning apparatus and a projector system using the same.

In this basic optical system, the curvature of field in cylindrical form due to the light deflection unit can be corrected by using an axially symmetric spherical-surface system without using a cylindrical surface.

In the optical system using a light deflection unit of the present embodiment, behaviors affecting optical image-forming effects are different in the direction toward the one-dimensional light modulation device and in the direction in which the light deflection unit performs scanning. Therefore, it is desirable to improve the image-forming performance, including distortion, as described below.

In the present embodiment, the first refractive surface of the rear group preferably has a lens element having a concave surface facing the light deflection unit.

While out-of-axis characteristics such as the above-mentioned distortion can be conspicuous particularly in cases where the scanning angle of the light deflection unit is set to be large, one of the solutions is, as in usual wide-angle lens systems, to configure the refractive first surface of the rear group subsequent to the light deflection unit to have a concave surface facing the light deflection unit.

In addition, some of the lens elements constituting the projection optical system are preferably formed using a high-refractive-index material with a refractive index equal to or greater than 1.7.

In addition, curvature of field is known as an aberration that causes a problem, as the above-mentioned distortion-aberration does. The reason is that, since a two-dimensional image is obtained by scanning performed by the light deflection unit in a direction perpendicular to the array direction of the one-dimensional light modulation device, the image plane of the two-dimensional image becomes a cylindrical surface unless it is optically corrected. For this purpose, minute control with optical elements is necessary, and high-refractive-index glass with a refractive index (nd) greater than 1.7 is desirably adopted.

In addition, some of the lens elements constituting the projection optical system are preferably formed using a low-dispersion material with an Abbe number equal to or greater than 70.

With regard to control of color aberration, preferably low-dispersion glass with an Abbe number (vd) equal to or greater than 70 is adopted.

In addition, preferably the working distance of the front group is equal to or greater than 25% of the focal distance of the front group.

The optical system of the present embodiment has a problem that, since a two-dimensional image is obtained by scanning performed by the light deflection unit in a direction perpendicular to the array direction of the one-dimensional light modulation device as described above, noise in the form of streaks tends to appear in the two-dimensional image owing to scratches on lens surfaces, adherence of dust or the like occurring in the front group in front of the light deflection unit. To solve this problem, the working distance of the front group is desirably equal to or greater than 25% of the focal distance of the front group. The plane to be the subject of the working distance is that of the one-dimensional modulation device or a plane on which an image is formed from the one-dimensional modulation device through a relay optical system such as an Offner optical system.

In addition, the focal distance of the front group may be larger than that of the rear group. When the focal distance of the front group is larger than that of the rear group, an effect of reducing the two-dimensional image can be obtained. When a reducing system is adopted, the size of the projection lens, that projects the two-dimensional image further on to the screen, can be reduced, thereby reducing the size of the entire system and keeping the cost down.

In contrast, the focal distance of the front group may be smaller than that of the rear group. When the focal distance of the front group is smaller than that of the rear group, an effect of enlarging the two-dimensional image can be obtained. When an optical system for enlarged projection is adopted, the pupil size of the projection lens is large and, particularly if a laser is adopted for the light source, there is an advantage that a brighter system can be provided for laser safety classification.

In addition, preferably the angle at which the optical axis extending through the front group and the rear group is bent is an acute angle.

When the light deflection unit is configured with a galvano motor that controls rotation of a plane mirror, the size of the mirror (in particular, the size in the direction of scanning) needs to be kept down in order to improve the load on the motor, or the efficiency of scanning. This can readily be achieved by setting the angle of bend between the front group and the rear group at an acute angle.

### Second Embodiment

Fig. 2 is an XZ sectional view showing a general configuration of a projection optical system of a light scanning apparatus according to the present embodiment.

In a one-dimensional light modulation device 11, the array extends in the Y direction. Hereinafter, a relay image of a one-dimensional light modulation device may be situated at the position of the one-dimensional light modulation device 11. Hereinafter, the one-dimensional light modulation device 11 may be replaced with a relay image of a one-dimensional light modulation device.

A one-dimensional image of the one-dimensional light modulation device 11 enters the projection optical system under a telecentric condition. The projection optical system is constituted of, from the one-dimensional light modulation device 11 side, G101 to G107 of a front group 14 and, across from a light deflection unit 12, G108 to 115 of a rear group 15. A two-dimensional image 13 is obtained by scanning by a mirror of the light deflection unit 12 in a direction perpendicular to the direction of the one-dimensional light modulation device.

When the elements of the one-dimensional light modulation device 11 simply perform light-intensity modulation, the light deflection unit 12 may be a mirror. However, in the case of a device that utilizes a diffraction effect, such as a GLV, it is necessary to form a Schlieren aperture at the mirror or the relay optical system of the light scanning apparatus.

The specific specification of the present system is shown in Table 1. The size of the one-dimensional light modulation device 11 is 20 (in arbitrary units). When the one-dimensional light modulation device is read, the F-number is 5. When an angle of incidence of 45-degrees with respect to the light deflection unit (scanning mirror) 12 is the center and the scanning angle is ±5 degrees, the size of the two-dimensional image is 35.6 × 20 and the aspect ratio of the image is 16 _{:} 9. When the scanning angle is ±15 degrees, the size of the two-dimensional image is 107 × 20 and the aspect ratio of the image is 48 _{:} 9. The scanning angle can be changed in accordance with desired aspect ratios.

For the glasses of G105, G106, G109, G110, G111, G112 and G115, nd is greater than 1.7. The glass of G101 and G102 is low-dispersion glass with an Abbe number vd equal to or greater than 70. In addition, the first refractive surface of G108 of the rear group has a concave surface facing the light deflection unit 12.

The coordinate system in the table is local, and the coordinate system is transformed by the reflection. The numbers shown in the leftmost part sequentially represent the configured surfaces. "OBJ" is the object point and, in the present embodiment, means the one-dimensional light modulation device or a relay image of a one-dimensional light modulation device. "STO" is the aperture. "IMG" is the image plane and, in the present embodiment, means the two-dimensional image.

In the table, the radii of curvature of the surfaces and the surface intervals are shown, and their polarities are reversed by the reflection. In addition, effects of the surfaces are shown; "REFL" represents the reflecting surface, and the blanks represent transmitting surfaces. In addition, the composition materials are shown. "ADE", "BDE" and "CDE" represent the degrees of rotation (deg) about the X, Y and Z axes, respectively. The mirror surface for light-scanning (in Table 1, the surface number 17) is set relative to the entrance-side optical axis such that the angle of incidence is 45 degrees, and a light ray reflected at an angle of 90 degrees is the center of scanning-rotation.

**(Table 1)**

| Surface number, etc. | Radius of curvature | Surface interval | Effect of surface | Material | Note |
|---|---|---|---|---|---|
| OBJ | ∞ | 14.311200 | | | |
| 1 | ∞ | 0.000000 | | | |
| 2 | 327.027000 | 13.400000 | | SFPL53_OHARA | |
| 3 | -48.296950 | 0.201000 | | | |
| 4 | 154.622600 | 13.400000 | | SFPL53_OHARA | |
| 5 | 129.132450 | 11.235900 | | | |
| 6 | -43.496400 | 4.020000 | | FD15_HOYA | |
| 7 | 84.956000 | 16.750000 | | | |
| 8 | 233.461500 | 14.740000 | | SFPL53_OHARA | |
| 9 | -46.792800 | 0.134000 | | | |
| 10 | 85.197200 | 13.400000 | | TAF3_HOYA | |
| 11 | -206.078600 | 7.602490 | | | |
| 12 | 37.676110 | 12.840550 | | TAF3_HOYA | |
| 13 | 112.861500 | 0.670000 | | | |
| 14 | 445.081000 | 2.010000 | | FD15_HOYA | |
| 15 | 25.537720 | 18.760000 | | | |
| | | | | | ADE:0.000000 |
| STO | ∞ | 0.000000 | REFL | | BDE:45.000000 |
| | | | | | CDE:0.000000 |
| 17 | ∞ | -46.000000 | | | |
| 18 | 35.700000 | -3.000000 | | EF2_HOYA | |
| 19 | 149.000000 | -1.350000 | | | |
| 20 | 122.000000 | -15.770000 | | LAC8_HOYA | |
| 21 | 57.250000 | -0.400000 | | | |
| 22 | 328.900000 | -15.980000 | | LAC8_HOYA | |
| 23 | 91.050000 | -0.300000 | | | |
| 24 | -900.000000 | -18.290000 | | LAC8_HOYA | |
| 25 | 171.300000 | -3.490000 | | | |
| 26 | -104.500000 | -27.330000 | | LAC8_HOYA | |
| 27 | 268.500000 | -1.780000 | | | |
| 28 | 224.280000 | -11.890000 | | EFD1_HOYA | |
| 29 | -85.500000 | -30.160000 | | | |
| 30 | 86.100000 | -5.000000 | | EFD2_HOYA | |
| 31 | -185.700000 | -0.400000 | | | |
| 32 | -179.000000 | -28.330000 | | LAC10_HOYA | |
| 33 | 103.120000 | -1.200000 | | | |
| 34 | ∞ | -29.502812 | | | |
| IMG | ∞ | 0.000000 | | | |

### Third Embodiment

Fig. 3 is an XZ sectional view showing a general configuration of a projection optical system of a light scanning apparatus according to the present embodiment. In the projection optical system, the angle of bend between the front group and the rear group is an acute angle of 70 degrees.

Fig. 3 is an XZ sectional view, as Fig. 2 is, and the array of a one-dimensional light modulation device (or a relay image of a one-dimensional light modulation device) 21 extends in the Y direction. A one-dimensional image of the one-dimensional light modulation device 21 enters the projection optical system under a telecentric condition. The projection optical system is constituted of, from the one-dimensional light modulation device 21 side, G201 to G207 of a front group 24 and, across from a light deflection unit 22, G208 to 215 of a rear group 25. A two-dimensional image 23 is obtained by scanning performed by a mirror of the light deflection unit 22 in a direction perpendicular to the direction of the one-dimensional light modulation device. In addition, the configuration of the rear group 25 is the same as in the second embodiment.

The specific specification of the present system is shown in Table 2. The size of the one-dimensional light modulation device 21 is 20 (in arbitrary units). In the reading of the one-dimensional light modulation device, the F-number is 5. When an angle of incidence of 35 degrees with respect to the light deflection unit (scanning mirror) 22 is the center and the scanning angle is ±5 degrees, the size of the two-dimensional image is 35.6 × 20 and the aspect ratio of the image is 16 _{:} 9. When the scanning angle is ±15 degrees, the size of the two-dimensional image is 107 × 20 and the aspect ratio of the image is 48 _{:} 9.

In addition, for the glasses of G209, G210, G211, G212, G213 and G215, nd is greater than 1.7. The glasses of G204, G205, G206 and G207 are low-dispersion glasses with an Abbe number vd equal to or greater than 70. In addition, the first refractive surface of G208 of the rear group has a concave surface facing the light deflection unit 22.

In addition, where the focal distance of G201 to G207 of the front group 24 is 100, the distance between the one-dimensional light modulation device 21 and G201 (so-called working distance) is 40, thereby obtaining a distance equal to or greater than 25% of the focal distance.

**(Table 2)**

| Surface number, etc. | Radius of curvature | Surface interval | Effect of surface | Material | Note |
|---|---|---|---|---|---|
| OBJ | ∞ | 40.000000 | | | |
| 1 | ∞ | 0.000000 | | | |
| 2 | ∞ | 0.400000 | | | |
| 3 | 57.600000 | 6.710000 | | PCD4_HOYA | |
| 4 | -57.600000 | 20.610000 | | | |
| 5 | -22.450000 | 2.000000 | | EFL6_HOYA | |
| 6 | 90.360000 | 3.230000 | | | |
| 7 | -237.000000 | 2.000000 | | EFEL1_HOYA | |
| 8 | 28.300000 | 2.050000 | | | |
| 9 | 37.570000 | 13.000000 | | FC5_HOYA | |
| 10 | -45.825000 | 1.870000 | | | |
| 11 | -31.980000 | 12.000000 | | FC5_HOYA | |
| 12 | -25.200000 | 0.300000 | | | |
| 13 | 355.000000 | 6.020000 | | FC5_HOYA | |
| 14 | -47.750000 | 0.620000 | | | |
| 15 | -39.600000 | 5.180000 | | EFL6_HOYA | |
| 16 | -80.800000 | 45.000000 | | | |
| | | | | | ADE:0.000000 |
| STO | ∞ | 0.000000 | REFL | | BDE:35.000000 |
| | | | | | CDE:0.000000 |
| 18 | ∞ | -46.000000 | | | |
| 19 | 35.700000 | -3.000000 | | EF2_HOYA | |
| 20 | 149.000000 | -1.350000 | | | |
| 21 | 122.000000 | -15.770000 | | LAC8_HOYA | |
| 22 | 57.250000 | -0.400000 | | | |
| 23 | 328.900000 | -15.980000 | | LAC8_HOYA | |
| 24 | 91.050000 | -0.300000 | | | |
| 25 | -900.000000 | -18.290000 | | LAC8_HOYA | |
| 26 | 171.300000 | -3.490000 | | | |
| 27 | -104.500000 | -27.330000 | | LAC8_HOYA | |
| 28 | 268.500000 | -1.780000 | | | |
| 29 | 224.280000 | -11.890000 | | EFD1_HOYA | |
| 30 | -85.500000 | -30.160000 | | | |
| 31 | 86.100000 | -5.000000 | | EFD2_HOYA | |
| 32 | -185.700000 | -0.400000 | | | |
| 33 | -179.000000 | -28.330000 | | LAC10_HOYA | |
| 34 | 103.120000 | -1.200000 | | | |
| 35 | ∞ | -25.346186 | | | |
| IMG | ∞ | 0.000000 | | | |

### Fourth Embodiment

Fig. 4 is an XZ sectional view showing a general configuration of a projection optical system of a light scanning apparatus according to the present embodiment. In the projection optical system, the angle of bend between the front group and the rear group is an acute angle of 70 degrees.

In the projection optical system of the present embodiment, the focal distance of the rear group is set to be 0.5 times that of the front group, thereby providing a 0.5-times reduction of the two-dimensional image. Since the aspect ratio is variable in the optical system, the reduction rate is obtained from an effective length corresponding to effective pixels of the one-dimensional light modulation device and the length of one side of the two-dimensional image corresponding to the effective pixels (in the present embodiment, the length of the two-dimensional image in the vertical direction or V direction). In addition, as in the second embodiment, the angle of incidence with respect to the scanning mirror is 35 degrees and the angle of bend between the front group and the rear group is 70 degrees, thereby achieving an acute angle in the optical system. Furthermore, a working distance of the front group equal to or greater than 25% of the focal distance of the front group is obtained.

Fig. 4 is an XZ sectional view, as Fig. 3 is, and the array of a one-dimensional light modulation device (or a relay image of a one-dimensional light modulation device) 31 extends in the Y direction. A one-dimensional image of the one-dimensional light modulation device 31 enters the projection optical system under a telecentric condition. The projection optical system is constituted of, from the one-dimensional light modulation device 31 side, G301 to G308 of a front group 34 and, across from a light deflection unit 32, G309 to 317 of a rear group 35. A two-dimensional image 33 is obtained by scanning performed by a mirror of the light deflection unit 32 in a direction perpendicular to the direction of the one-dimensional light modulation device.

The specific specification of the present system is shown in Table 3. The size of the one-dimensional light modulation device 31 is 20 (in arbitrary units). In the reading of the one-dimensional light modulation device, the F-number is 5. Since the present system is a 0.5-times reducing system, in the image-forming for the two-dimensional image, the F-number is 2.5. When an angle of incidence of 35 degrees with respect to the light deflection unit (scanning mirror) 32 is the center and the scanning angle is ±3.4 degrees, the size of the two-dimensional image is 17.8 × 10 and the aspect ratio of the image is 16 _{:} 9. When the scanning angle is ±10.9 degrees, the size of the two-dimensional is 53.3 × 10 and the aspect ratio of the image is 48 : 9.

In addition, for the glasses of G315, G316 and G317, nd is greater than 1.7. The glass of G304, G305, G306 and G307 is a low-dispersion glass with an Abbe number vd equal to or greater than 70. In addition, the first refractive surface of G309 of the rear group 35 has a concave surface facing the light deflection unit 32.

Furthermore, where the focal distance of G301 to G308 of the front group 34 is 150, the focal distance of G309 to 317 of the rear group 35 is 75, so that the entire system is a 0.5-times reducing system. In addition, the distance between the one-dimensional light modulation device 31 and G301 (so-called working distance) is 40, thereby obtaining a distance equal to or greater than 25% of the focal distance 150 of the front group 34.

**(Table 3)**

| Surface number, etc. | Radius of curvature | Surface interval | Effect of surface | Material | Note |
|---|---|---|---|---|---|
| OBJ | ∞ | 39.954300 | | | |
| 1 | ∞ | 0.000000 | | | |
| 2 | ∞ | 0.400000 | | | |
| 3 | 95.500000 | 5.570000 | | PCD4_HOYA | |
| 4 | -59.300000 | 24.850000 | | | |
| 5 | -31.550000 | 7.260000 | | EFEL2_HOYA | |
| 6 | 50.300000 | 9.300000 | | | |
| 7 | 120.000000 | 10.000000 | | EFL5_HOYA | |
| 8 | 52.900000 | 1.170000 | | | |
| 9 | 154.800000 | 13.000000 | | FC5_HOYA | |
| 10 | -400.000000 | 2.500000 | | | |
| 11 | -149.000000 | 10.000000 | | FC5_HOYA | |
| 12 | -55.840000 | 16.000000 | | | |
| 13 | -347.500000 | 16.200000 | | FC5_HOYA | |
| 14 | -45.440000 | 0.300000 | | | |
| 15 | 168.290000 | 6.100000 | | FC5_HOYA | |
| 16 | -108.300000 | 1.090000 | | | |
| 17 | -83.400000 | 2.000000 | | EFEL2_HOYA | |
| 18 | 187.000000 | 45.000000 | | | |
| | | | | | ADE:0.000000 |
| STO | ∞ | 0.000000 | REFL | | BDE:35.000000 |
| | | | | | CDE:0.000000 |
| 20 | ∞ | -38.000000 | | | |
| 21 | 42.000000 | -7.930000 | | EF5_HOYA | |
| 22 | -877.850000 | -2.380000 | | | |
| 23 | 376.700000 | -13.940000 | | PCD4_HOYA | |
| 24 | 63.530000 | -0.300000 | | | |
| 25 | -223.000000 | -25.000000 | | PCD4_HOYA | |
| 26 | 140.000000 | -15.080000 | | | |
| 27 | 920.000000 | -15.630000 | | PCD4_HOYA | |
| 28 | 148.620000 | -0.250000 | | | |
| 29 | -157.000000 | -10.150000 | | PCD4_HOYA | |
| 30 | -3673.890000 | -0.250000 | | | |
| 31 | -52.310000 | -23.840000 | | PCD4_HOYA | |
| 32 | -538.000000 | -0.990000 | | | |
| 33 | -1370.000000 | -2.600000 | | EF1_HOYA | |
| 34 | -35.380000 | -24.220000 | | | |
| 35 | 142.000000 | -2.600000 | | FD60_HOYA | |
| 36 | -93.700000 | -0.200000 | | | |
| 37 | -64.500000 | -16.870000 | | TAF1_HOYA | |
| 38 | 439.770000 | -1.200000 | | | |
| 39 | ∞ | -11.210900 | | | |
| IMG | ∞ | 0.113933 | | | |

### Fifth Embodiment

Fig. 5 is an XZ sectional view showing a general configuration of a projection optical system in a projector that uses a light scanning apparatus of the above-mentioned embodiments.

There is added a projection lens that further enlarges and projects a two-dimensional image of the above-mentioned embodiments on to a screen. The two-dimensional image and the screen are in a relation of an object and an image with respect to the projection lens for enlargement and projection.

Light from a light source 43 is directed to a one-dimensional light modulation device 41 by an illumination lens 42. A one-dimensional image from the one-dimensional light modulation device 41 is modulated and controlled by a video signal and guided to an Offner optical system. The modulated and controlled light flux is reflected by a primary mirror 44, and only video light among the light flux is reflected by a secondary mirror because of a Schlieren filter 45 provided therein. The light is again reflected by the primary mirror 44, then forms a relay image, and further is guided to a light scanning apparatus, which is a skeleton of the above-mentioned embodiments. The one-dimensional image is guided to a light deflection unit 46 through a front group 47 of a projection optical system. The scanning angle of the light deflection unit 46 is controlled in accordance with a desired aspect ratio of a two-dimensional image. The two-dimensional image is formed after passing through a rear group 48.

The obtained two-dimensional image is enlarged and projected by a projection lens 49 for enlarged projection, and projected on to a plane screen to be viewed by a viewer.

### Sixth Embodiment

Figs. 6 and 7 are operation principle diagrams of a GLV (Grating Light Valve) device that can be used in the above-described embodiments. For example, one described in Patent Document 3 can be used.

In Fig. 6, movable ribbons 54 and fixed ribbons 55 are alternately arrayed and a reflective film 56 is formed on a surface of each of them. In addition, an electrode layer 53 is formed on a lower surface of a substrate 51. When a potential difference is not applied between the movable ribbons 54 and the electrode layer 53, the reflection surfaces of the movable ribbons 54 and the fixed ribbons 55 are at the same height and a diffraction effect does not occur; an incident light wave front 57 exits as it is, as regular reflection light (that is, zeroth-order light).

Meanwhile, referring to Fig. 7, when a potential difference is applied between the movable ribbons 54 and the electrode layer 53 and the moving ribbons 54 approach a substrate surface 52 such that the depth of the ribbons becomes λ/4, a reflection diffraction effect occurs and the incident light wave front 57 becomes a ± first-order reflection diffraction light wave front 58. The individual depths of ribbons are controlled in accordance with an image signal and thereby a phase-reflection-type diffraction grating is obtained.

In addition, while in the present embodiment the above-mentioned GLV is mentioned as an example of a one-dimensional light modulation device, applications to other display devices such as a transmissive-type or reflective-type liquid crystal display are also possible.

The present invention is not limited to the above-mentioned embodiments.

For example, the one-dimensional light modulation device is not limited to a GLV device and is not particularly limited.

A one-dimensional image from a one-dimensional light modulation device may be guided directly to a projection optical system, or may be guided to a projection optical system after forming a relay image.

Each of the optical systems of the front group and the rear group that constitute a projection optical system is constituted of one or more optical lenses.

Various modifications other than those mentioned above are possible in a range not departing from the gist of the present invention.

A light scanning apparatus of the present embodiment can be applied to a light scanning apparatus that constitutes an image display device, and can be applied, in particular, to a light scanning apparatus that constitutes a projector system for projection on a plane screen.

## Claims

1. A light scanning apparatus comprising:
a one-dimensional light modulation device in which a plurality of pixels are arrayed in a form of a line;
a light deflection unit that scans a one-dimensional image, which is obtained by light modulation using the one-dimensional light modulation device, in a direction perpendicular to the array direction of the one-dimensional light modulation device; and
a projection optical system that includes therein the light deflection unit, and that projects the one-dimensional image and forms a two-dimensional image, **characterized in that**
an aspect ratio of the two-dimensional image is variable in accordance with an angle through which the one-dimensional image is scanned by the light deflection unit.

2. The light scanning apparatus according to claim 1, **characterized in that**
the projection optical system has a front group on the one-dimensional light modulation device side and a rear group on the two-dimensional image side with the light deflection unit therebetween, and both the front group and the rear group have a positive power.

3. The light scanning apparatus according to claim 1, **characterized in that**
in the projection optical system, a surface of an optical element constituting the projection optical system is axially symmetric with respect to an optical axis.

4. The light scanning apparatus according to claim 1, **characterized in that**
the projection optical system has a front group on the one-dimensional light modulation device side and a rear group on the two-dimensional image side with the light deflection unit therebetween, and a first refractive surface of the rear group has a lens element that has a concave surface facing the light deflection unit.

5. The light scanning apparatus according to claim 1, **characterized in that**
in the projection optical system, both the one-dimensional light modulation device side and the two-dimensional image side have a telecentric property.

6. The light scanning apparatus according to claim 1, **characterized in that**
a lens element constituting the projection optical system is formed using a high-refractive-index material having a refractive index equal to or greater than 1.7.

7. The light scanning apparatus according to claim 1, **characterized in that**
a lens element constituting the projection optical system is formed using a low-dispersion material having an Abbe number equal to or greater than 70.

8. The light scanning apparatus according to claim 1, **characterized in that**
the projection optical system has a front group on the one-dimensional light modulation device side and a rear group on the two-dimensional image side with the light deflection unit therebetween, and a working distance of the front group is equal to or greater than 25% of focal distance of the front group.

9. The light scanning apparatus according to claim 1, **characterized in that**
the projection optical system has a front group on the one-dimensional light modulation device side and a rear group on the two-dimensional image side with the light deflection unit therebetween, and a ratio of a focal distance of the front group to that of the rear group is greater than 1.

10. The light scanning apparatus according to claim 1, **characterized in that**
the projection optical system has a front group on the one-dimensional light modulation device side and a rear group on the two-dimensional image side with the light deflection unit therebetween, and a ratio of focal distance of the front group to that of the rear group is less than 1.

11. The light scanning apparatus according to claim 1, **characterized in that**
the projection optical system has a front group on the one-dimensional light modulation device side and a rear group on the two-dimensional image side with the light deflection unit therebetween, and an angle at which an optical axis extending through the front group and the rear group is bent is an acute angle.

12. The light scanning apparatus according to claim 1, **characterized by** having
between the one-dimensional light modulation device and the projection optical system, an Offner optical system as a relay image-forming system.

13. The light scanning apparatus according to claim 1, **characterized by** having
in a subsequent stage of the projection optical system, a projection lens that further enlarges and projects the two-dimensional image.

14. The light scanning apparatus according to claim 12, **characterized by** having
in a subsequent stage of the projection optical system, a projection lens that further enlarges and projects the two-dimensional image.
